(19) **Europäisches Patentamt / European Patent Office / Office européen des brevets**

(11) **EP 1 385 295 B1**

(12) **EUROPEAN PATENT SPECIFICATION**

(45) Date of publication and mention
of the grant of the patent:
**31.10.2007 Bulletin 2007/44**

(51) Int Cl.:
***H04L 12/24*** *(2006.01)* ***H04L 29/12*** *(2006.01)*

(21) Application number: **02354114.7**

(22) Date of filing: **25.07.2002**

(54) **Process and apparatus for distributing network configuration settings**

Verfahren und Vorrichtung zur verteilung netzwerk-konfigurierungseinstellungen

Procédé et dispositif de distribution des paramètres de configuration d'un réseau

(84) Designated Contracting States:
**AT BE BG CH CY CZ DE DK EE ES FI FR GB GR IE IT LI LU MC NL PT SE SK TR**

(43) Date of publication of application:
**28.01.2004 Bulletin 2004/05**

(73) Proprietor: **Hewlett-Packard Company**
**Palo Alto, CA 94304 (US)**

(72) Inventors:
• **Richard, Bruno**
**38920 Crolles (FR)**

• **Flaven, Denis**
**38830 Saint-Pierre d'Allevard (FR)**

(74) Representative: **Lloyd, Richard Graham**
**Hewlett-Packard France**
**Intellectual Property Section**
**Legal Department**
**Etablissement de Grenoble**
**38053 Grenoble Cedex 09 (FR)**

(56) References cited:
WO-A-01/26336 WO-A-01/50791
GB-A- 2 356 111 US-B1- 6 212 563

EP 1 385 295 B1

## Description

## Technical field of the invention

The invention relates to communication systems and more particularly to a process and apparatus for distributing network configuration settings, such as an Internet Protocol (IP) address, throughout a network.

## Background art

When a client computer or a device is connected to an intranet or Internet network it requires a set of network configuration settings for the purpose of achieving an effective communication. In particular, this communication is based on the allocation of an IP address assigned to the communicating parties.

Different mechanisms are known for providing an IP address to a particular device.

A first mechanism is based on the use of a configuration file which contains the IP address which the device can use, during its booting process, for the purpose of establishing a TCP/IP communication. This configuration file however requires a manual operation from a skilled user or operator and is time consuming. Furthermore the use of this manual configuration is not optimal since, when the device is not operated, the IP address remains unassigned and unused.

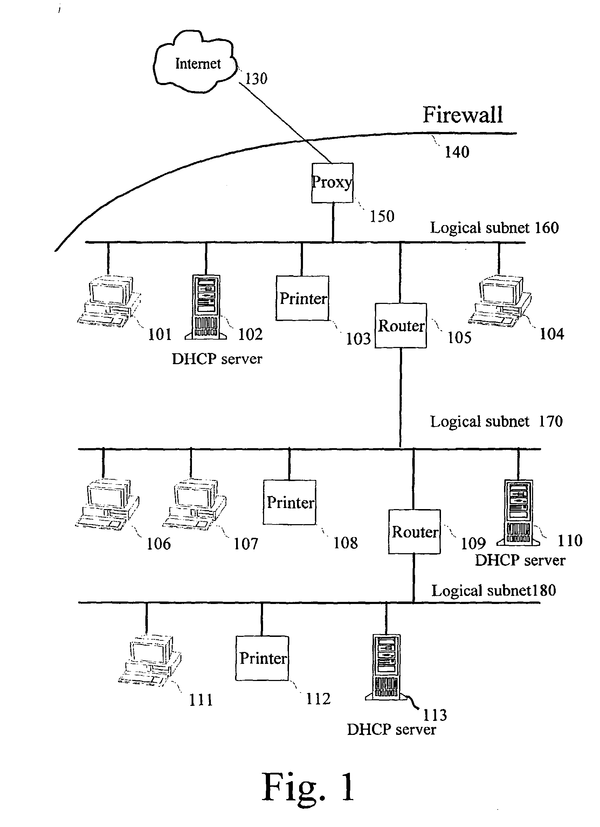

A second known mechanism is based on the Dynamic Host Control Protocol (DHCP), such as defined in Request For Comments 2131 (RFC), and which assigns to one particular server - the DHCP server - the role of distributing the network parameters and more particularly the IP addresses to the different devices being attached to the network. The DHCP server optimizes the use of the IP address space since the IP addresses can be reused upon powering-off of one device and assigned to another device. Further, it permits the manual configuration of the network to be centralized since only the DHCP server(s) require(s) manual configuration. Once configured, the allocation of the IP addresses is based on the following mechanism: when a device is booting it sends to the subnetwork a broadcast frame requesting an IP address, which broadcast frame is forwarded to all the devices attached to the same subnetwork. The DCHP server replies by providing one particular IP address among a range of addresses for which the DHCP server has the full responsibility. When a large intranet network is to be set up, including different subnetworks, the network administrator generally uses several DHCP servers, each of which is assigned one particular subnet and serves for the allocation of the IP addresses to the different devices attached to this subnet. Figure 1 illustrates a intranet network comprising three different subnetworks, each of which has a dedicated DHCP server for assigning the IP addresses belonging to the range of addresses corresponding to the subnetwork. More particularly, there is shown a first subnetwork 160 which comprises for instance a computer client 101, a DHCP server 102, a printer 103, a client 104 and a router 105. A proxy 150 is used for establishing a communication channel with an Internet network 30 through a firewall 140. Router 105 allows the communication between first subnet 160 and a second subnet 170 which comprises a first client computer 106, a second client computer 107, a printer 108, a router 109 and a DHCP server 110. Router 109 allows second subnet 170 to communicate with a third subnetwork 180 comprising a client computer 111, a printer 112 and a DHCP server 113. In order to avoid the transmission of the DHCP broadcast frames through the different areas of the intranet network, the routers generally prevent their transmission from one subnetwork to another. For this reason, each subnetwork requires its own DHCP server which permits the distribution of the IP addresses to the different devices attached to its subnetwork to be handled.

Thus, while the above arrangements considerably simplify the configuration of the network, the allocation of the addresses is still not yet fully automated and still requires the intervention of a skilled network administrator.

A third mechanism is generally referred to (in the art) as *Reverse Address Resolution Protocol* (RARP) protocol which allows the devices to dynamically find their protocol addresses. Indeed, each device on the network has a unique hardware address - a so called Media Access Control (M.A.C.) address - which is assigned by the manufacturer of the device. The RARP protocol is described in the Request for Comments (RFC) number 903. The principle of the RARP protocol is to read the unique MAC address from the interface card and to send a broadcast frame on the subnetwork - known as a RARP request - requesting a reply (a so called RARP reply) containing the IP address. While this mechanism provides a solution to the assignment of a IP address in a situation where a device has no configuration file providing such an IP address, it should be observed that, practically, this RARP protocol is reserved for complex networks and, further, is incompatible with the use of a DHCP host.

A fourth mechanism was designed by Microsoft Corp. , and is known under the name *APIPA* standing for *Automatic Private Internet Protocol Addressing,* which is based on the use of one specific range of addresses - starting with 169.x.x.x., and which allows the communication between the different devices of a subnetwork. This mechanism, which is disclosed in US 6,101,499 has a main drawback which results from the fact that the address being assigned to the device, while allowing communication between the different elements of the subnetwork - does not permit routing of the frames out of the subnetwork. With respect to the figure 1, it can be seen that client computer 111 can communicate with printer 112 by means of an IP address starting by 169.x.x.x, but will not be able to receive IP packets from outside since the IP frames based on a address 169.x.x.x. will not be routed by the different routers up to the right destination, i.e. client computer 111.

A fifth mechanism is disclosed in US 6,345,294 assigned to CISCO Technology Inc., entitled 'Method and apparatus for remote configuration of an appliance on a network". There is disclosed a process for booting an appliance regardless of whether there is a local server in the local network environment., such as a DHCP server or a boot server. For that purpose, once connected to the local network, the appliance executes a boot algorithm based on a observation and learning phase of the IP environment for the purpose of allowing connection to a external server providing further network configuration parameters. This prior system however does not disclose how to develop a knowledge of the IP environment and the distribution of that knowledge for facilitating the connection to new devices.

A further mechanism is disclosed in GB 2356111, in which a proxy agent is provided that discovers network devices that do not have an assigned IP address and issues a DHCP request on their behalf.

## Summary of the invention

The present invention is generally directed to facilitating the task of the network administrator and providing a process for providing automatic network configuration parameters, thus allowing easy deployment of machines and devices, such as non configured or new computers, to an existing network.

This is achieved by means of a process for distributing network configuration settings throughout a network comprising a set of devices, which includes the steps of:

- establishing in at least one device a description of the network environment;
- detecting in said at least one device a request for network parameters issued from a newly connected requesting device;
- in response to detecting said request starting a first timer with a first duration $T_2$ dependent on a predetermined criterion;
- transmitting to said requesting device network settings after the expiration of said first period.

In one embodiment, the predetermined criterion is linked to the experience and knowledge gathered by the at least one devices, so that the configuration parameters are provided by the device having the deepest knowledge of the network environment. In particular, this knowledge is developped from the access to the Address Resolution Protocol (A.R.P.) tables and NSLOOKUP tables available in the network.

Preferably, the network configuration settings include the Internet protocol (IP) address so that a newly connected device receives its IP address even in the absence of a DHCP server.

In preferred embodiments the detecting step comprises:

- detecting a Dynamic Host Control Process (DHCP) request issued by a newly connected requesting device;
- starting a second timer with a first duration $T_1$ prior to the first timer;
- testing whether said DHCP request received a response from a DHCP server;
- terminating the process in response to the detection of said response within said first duration.

Preferably, the process may be completed if an answer to said DHCP request is detected during said first duration $T_2$. Additionally, the transmitting step may comprise:

- computing an IP address after the expiration of said first duration $T_2$,
- forwarding a DHCP reply containing said computed IP address to said newly connected requesting device.

This allows the coexistence of different instances of the same network parameter allocation agent on different devices of the subnet and further achieves an automatic computation of the IP address to allocate to each newly connected device.

The second timer can be disregarded when the device is a router. It is this router which generally has the deeper insight of the network configuration parameters and which eventually provides the more appropriate and valuable settings to a newly connected requesting device.

In one embodiment, the second duration $T_2$ is derived from a computation of both the Media Access Control (MAC) parameter of said device and said newly connected requesting device.

In an alternate embodiment, the second duration $T_2$ is computed from the time of operation of said device so that the device having the longer experience of the network has the lower time of response.

Preferably, the IP protocol address is computed on the basis of the IP addresses assigned to the sub network, the Address Resolution Protocol (ARP) and NSLOOKUP information received from the Domain Name Servers (DNS), along with PING or ICMP ECHO REQUEST verification of the address availability.

Many additional parameters can be distributed with this mechanism, and particularly the reference to an existing Hyper Text Transfer Protocol (HTTP) proxy, the reference to the gateway and, even, a booting image with which the newly connected requesting device will be able to boot. This is very useful for starting a computer without use of the hard disk drive.

The invention is well adapted to the arrangement of an improved router and, more generally, to any device such as a printer which will provide the IP address and configuration settings to other network devices.

In a related example falling outside the scope of the present invention, there is provided a process for assigning an IP address to a client device having at least one configuration file comprising at least one set of configuration parameters. The process involves the steps of:

- generating and transmitting a Dynamic Host Control Protocol (DHCP) request to said network;
- if no answer is received, testing the existence of one gateway corresponding to one particular set of parameters among said at least one set of configuration parameters and, if so, loading and applying said particular set of parameters.

Preferably the process involves the step of determining a particular context corresponding to the booting of said device and loading the network configuration settings corresponding to said context. In particular the context can be determined from the information received by a Global Positioning System Receiver (GPS).

If all the steps above remain unsuccessful, the process may involve the step of applying an Automatic Private Internet Protocol Addressing procedure. The process may even involve downloading a bootstrap image if an answer is received to said DHCP request.

## Description of the drawings

An embodiment of the invention will now be described, by way of example only, with reference to the accompanying drawings, wherein:

Figure 1 illustrates a typical architecture of a intranet network comprising three subnetworks.

Figure 2 illustrates the use of some clients incorporating the NPAA agent in a network architecture.

Figure 3 illustrates the process being processed during the booting of the NPAA agent.

Figure 4 illustrates the election process of the NPAA agent.

## Description of the preferred embodiment of the invention

There following description will detail a new functionality, which will be herein referred to as a Network Parameter Allocation Agent (NPAA) which can be embodied within a specific software agent installed in a computer, and which is well suited for elaborating and distributing network parameters to other client computers even when a DHCP server or other instances of NPAA agents are already installed.

The process for automatic allocation of network parameters will be more particularly described with reference to the assignment of an IP address to a device requesting connection to the network, for instance a non configured, brand new computer. However, it will be understood that the mechanism which is hereinafter described may straightforwardly be adapted to the distribution of other useful network parameters including, without any limitation, the definition of the gateway and the subnet mask, the Domain Name Server (DNS) addresses, the firewall parameters such as the HTTP proxy or (SOCKS) gateway as defined in the Request for Comments (RFC) 1928 and even some network resources such as a system boot image.

The Network Parameter Allocation Agents (NPAA) are preferably embodied under the form of a specific software agent installed in a client computer of the subnetwork, and preferably within each client and also the router. The NPAA Agent is a software program which can be standardly installed at the manufacturing process of the computer or may also be later downloaded by the user during an Internet connection to a service provider. The NPAA agent can even be implemented in any device, and more particularly in a printer and a router.

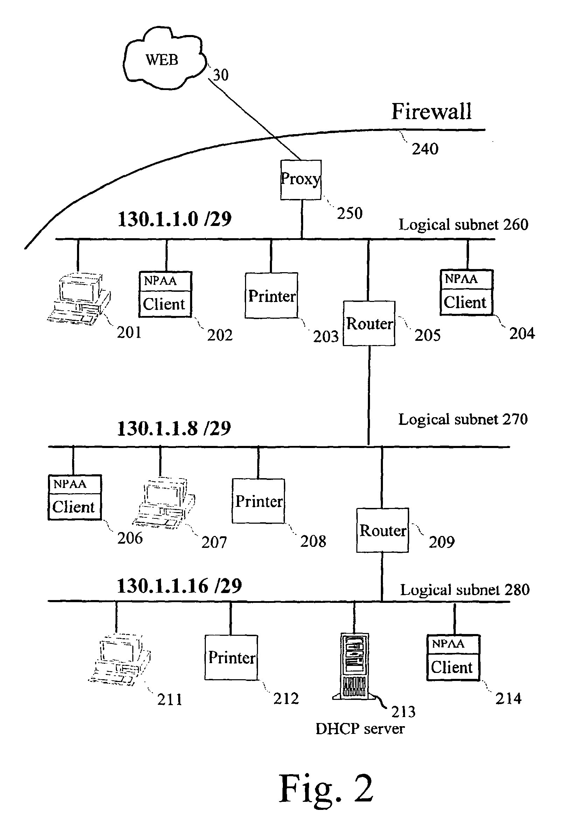

Figure 2 shows an example of a network architecture where some clients include the NPAA agent which can take place a missing or temporarily unavailable DHCP server. The intranet network comprises, for instance, a first subnetwork 260 which includes for instance a computer client 201, a computer client 202 having the NPAA agent, a printer 203 , a router 205, and a client computer 204. Computers 202 and 204 are assumed to be provided with the NPAA agent. A proxy 250 serves to the communication with the Internet network through a firewall 240. For the sake of clarity, the first subnet is assumed to be assigned the range of addresses defined by 130.1.1.0/29. Router 205 is used for the communication between the first subnet and a second subnet 270, the latter comprising a first client computer 206 having the NPAA agent therein installed, a second client computer 207, a printer 208 and a router 209. The second subnetwork is assumed to be assigned the range of addresses defined by 130.1.1.8/29 . Router 209 is used for the communication with a third subnetwork which comprises a client computer 211, a printer 212, a DHCP host 213 and a client computer 214 which comprises the NPAA agent therein installed. The third subnetwork is assumed to be assigned the range of addresses defined by 130.1.1.16/29

The NPAA agent is fitted with means achieving, firstly, elaboration of a knowledge base of network parameters and, secondly, distribution of such network parameters throughout the network to any requesting device. In this respect, the NPAA agent achieves the general goal of peer-to-peer IP setup allowing each common computer or device to assist any new device requesting connection to the local network.

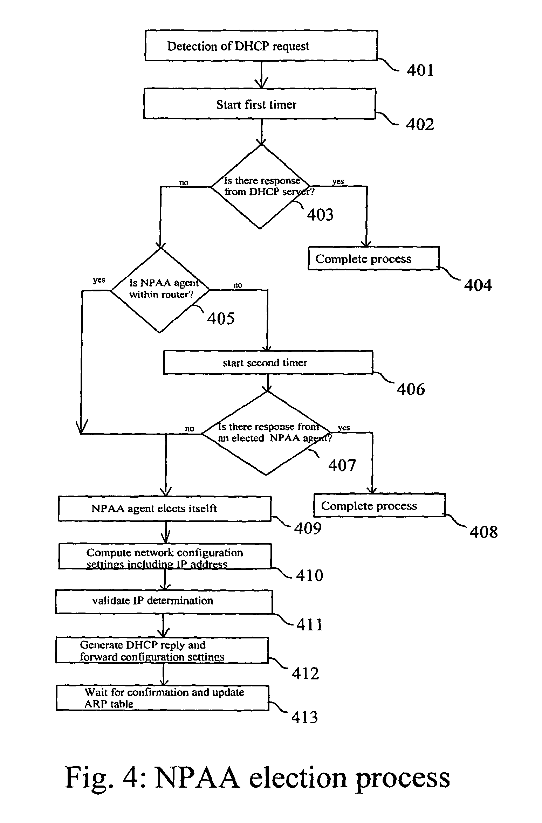

For this purpose, the NPAA agent provides the function of a DHCP server - the distribution of IP addresses - but it basically distinguishes over such a DHCP server. Firstly each NPPA agent is capable of automatically elaborating or retrieving a set of network configuration parameters without requiring manual configuration. Secondly, it is capable of coexisting with other instances existing in the same subnet, as it will be shown in detail hereinafter with respect to figure 4. Thirdly, the NPAA automatically provides the best Network configuration parameters, including the IP address, in accordance with an election mechanism without requiring any manual operation from a user or a network administrator. The process substantially deviates from the traditional DHCP mechanism since there is no need to store a list of predefined IP addresses as there is with a DHCP server.

The NPAA server computes the addresses which are to be allocated to each newly requesting device from the knowledge of the network parameters which are contained within the network configuration files - and particularly the ARP tables - of the devices forming the network. Those parameters include the IP addresses assigned to the different devices, the subnet mask of the sub network, the IP addresses of one or more routers, the name servers, and other network settings. The knowledge of those parameters are derived from the access to the ARP tables, as well as from the observation of the local network traffic. More information concerning the elaboration of such parameters can be found in US 6,345,294 entitled "Method and apparatus for remote configuration of an appliance on a network" assigned to CISCO Technology Inc.

In addition to the elaboration of a knowledge base of network parameters, a specific election mechanism is further provided for the purpose of discriminating one particular NPAA agent among all the different possible elected agents - which is likely to provide the more valuable network settings to a newly requesting device.

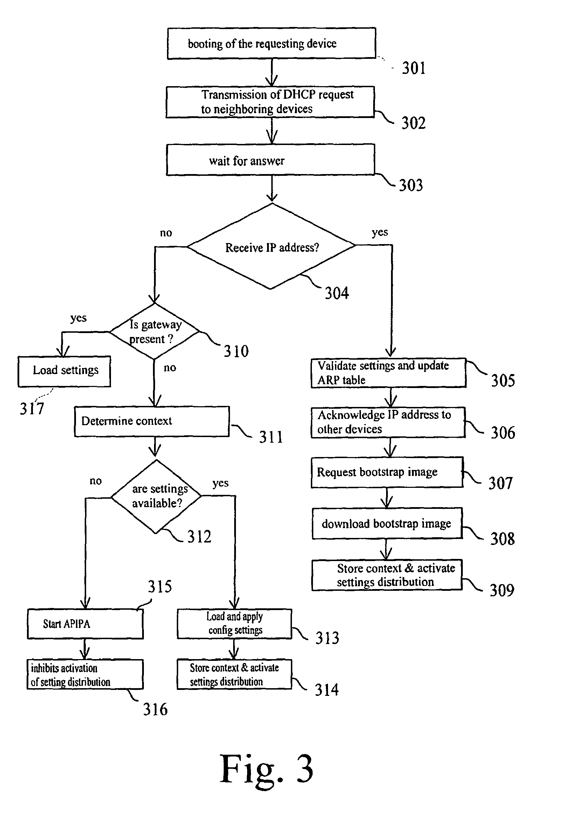

With respect to figure 3 there will now be explained in detail the booting process of an NPAA agent for the purpose of achieving its connection to an existing network. With the exception of the router which receives their configuration settings from a configuration file, the clients, including the printers, receive their address from a NPAA client.

The process starts with a step 301 which corresponds to the booting of a new device which will request network configuration settings, for instance client computer 202 of figure 2. The booting operation of such a device is executed in a conventional manner and will not be further detailed. It should be sufficient to observe that the requesting client 202 starts Preboot eXecution Environment (PXE) mode.

In a step 302, the requesting device starts by searching for a DHCP server in order to obtain an IP address. To achieve this, and in accordance with the DHCP/BOOTP protocol which is defined by the RFC 2131, the NPAA agent of computer 202 generates a broadcast DHCP REQUEST frame which is forwarded to every device attached to the considered subnet, e.g. subnet 260. More information concerning the DHCP request can be found in the above referenced RFC. Further, it should be noticed that, as known by the skilled man, the communication within the subnetwork is achieved by means of the MAC address which is assigned to each network interface by the product manufacturer. Therefore, in step 302, the client computer 202, even if it has no IP address, can communicate with the other devices attached to the same subnetwork.

In a step 303, the requesting NPPA agent enters in a waiting state and waits for a potential answer to its DHCP request. The answer to the DHCP request - generally referred to as a DHCP reply - can come either from a DHCP server (for instance DHCP 213) or an elected NPAA agent in accordance with the election process which will be described hereinafter. Referring again to figure 2 and specifically subnet 260, it can be seen that the answer may be provided from either the client computer 204 or router 250 if the router 250 incorporates the NPAA agent. The determination of the particular NPAA agent which will provide the configuration settings - including the IP address - will be explained in detail with reference with figure 4.

In a step 304, a test is performed in order to determine whether an answer is received within a predetermined duration.

If an answer is received, then the process proceeds to a step 305 where the network configuration settings are validated by any suitable mechanism and, for instance, by means of an ICMP ECHO REQUEST command or PING for the purpose of ensuring that received IP address is clearly available. The requesting device then configures itself using the retrieved parameters and updates its ARP table.

The requesting device then issues, in a step 306, an appropriate broadcast frame to the other devices sharing the same network subnet so that those devices can update their own ARP tables.

The process can then proceed with an optional steps 307 and 308 for the purpose of downloading a booting image. In a step 307 the requesting device requests an PXE bootstrap image to the NPAA agent, and such image can be downloaded in a step 308. This is useful if the requesting agent is, for instance, an X terminal, without access to the hard disk drive, or when a maintenance operation is required, for instance after the replacement of the hard disk drive.

In a step 309, the requesting device stores within the hard disk file the current context and further may start the NPAA agent for the purpose of activating its settings distribution function so that NPAA agent can compete for the allocation of the IP addresses. From this instant, the NPAA agent continues the development of the knowledge base of the network configuration parameters in order to accumulate the more information and compete with other instances of NPAA agents for distributing the network settings.

If the test of step 304 shows that no answer was received from an elected NPAA agent, it is possible that the booting device is the first booting apparatus within the network, or that the DHCP server is temporarily unavailable. The process then proceeds to the following steps, starting with a step 310, for the purpose of determining an appropriate set of configuration settings. For this purpose the requesting NPAA agent may use a set of configuration files loaded within the hard disk drives, with each configuration file possibly containing the address of a gateway.

In a step 310, the process performs a test to determine whether one particular gateway referenced within the configuration files answers to a PING. If this happens to be the case, the process proceeds to a step 317 where the particular configuration file is loaded. The process then proceeds to a step 318 where the settings distribution function of the NPAA agent is activated. This is very useful since it allows one device, for instance a laptop computer, to use the appropriate configuration files in accordance with the precise situation, for instance in an intranet office environment. As previously, the NPAA agent which is candidate for network settings distribution continues the development of the knowledge base of the network configuration parameters in order to accumulate knowledge and experience concerning the IP environment and compete with other instances of NPAA for the distribution of such parameters.

Conversely, if no gateway is present, then the process may proceed, before entering into the APIPA procedure of step 315, to an optional step 311 where the particular context of booting is determined. Many embodiments can be contemplated for determining the context of operation of the requesting device. In simple embodiments,, advantage could be taken of the use of a learning phase or observation of the traffic on the local network, as disclosed in the above mentioned CISCO patent. In more sophisticated embodiments information relating to the precise location of the device, such as provided by a Global Positioning System (GPS) satellite receiver, might for instance is used for establishing the context.

In accordance with the context which is computed, the process then checks, in a step 312, whether said context corresponds to a set of network configuration settings which are stored within the hard disk files.

If some settings correspond to the current context, then the process loads and applies the configuration settings in a step 313 and then the current context is stored and the settings distribution function of the NPAA agent is activated in the requesting device in a step 314. The NPAA agent then proceeds further with the accumulation of knowledge and experience concerning the IP environment for the purpose of competition with other instances of NPAA agents.

It can be seen that, in accordance with the context, appropriate settings are automatically loaded and will then be distributed to the other devices in accordance with the election mechanism which will be described hereinafter with reference to figure 4.

If the test of step 312 fails, meaning that the context does not permit appropriate settings to be retrieved, then the process starts the APIPA procedure so that one address is allocated to this device but, however preferably, the settings distribution function of the NPAA agent is not activated in this case so that the distribution of the 169.x.x.x address is not generalized in the other devices. This is achieved by a step 316 corresponding to the inhibition of the activation of NPAA. It should be noticed that this allows that one device which has good network settings, and which is for some reasons powered-on later, has the possibility of distribute the right settings to the network and, even, reboot the first machine with an appropriate IP address.

Once the NPPA has been launched, it develops a comprehensive description of the network parameters for the purpose of being able to distribute such parameters, as backup support to a missing DHCP host.

With respect to figure 4, there will now be described the election process of the NPAA agent which - as explained above is effective only if it has not received its settings from the APIPA mechanism - and how the appropriate IP address is retrieved and assigned to the requesting device.

The process starts with a step 401 which is the detection of the broadcast frame transmitted by a requesting device. As a consequence, all the activated NPAA agents sharing the same subnetwork receive the broadcast frame.

In a step 402, the process starts a first timer or watchdog mechanism and waits until the expiration of a first predetermined delay T1, which can be set, in one embodiment, to a few seconds. This first watchdog mechanism is used for the purpose of giving the possibility to a DHCP server to respond in an appropriate manner to the DHCP request. This would be the case of DHCP server 213 of figure 2.

In a step 403, the NPAA agent checks whether such a response comes from a DHCP server during the first delay of the watch dog mechanism. If so, then the process completes in a step 404.

At the expiration of the first delay, the process then proceeds to a step 405 where a test is performed to determine whether the NPAA agent which is considered is installed within a router. Alternatively, step 405 may be optional. It is useful that a router respond prior to any other devices since a router has generally a wider knowledge of the network settings, including the IP gateway, and because routers are very seldom switched off. If the NPAA agent is running within a router, the process then directly proceeds to a step 409 where the running NPAA agent is being elected. Conversely, the process proceeds to a step 406 where a timestamp watch dog mechanism is being launched.

If the NPAA is running in a device which is not a router, the process then proceeds to a step 406 where a second timer or watch dog mechanism is initiated. The time delay associated to the second watchdog mechanism closely depends on a set of factors which may vary in accordance with the embodiment of the invention which is considered. The factors or set of criteria which are used permit the different NPAA instances existing in the different devices to be discriminated, and to allow the election of one instance.

In one embodiment, the second delay is dependent on a mathematical factor computed from the MAC address of both the device where the NPAA agent is located and the MAC address of the requesting device. Preferably, the mathematical distance between the two MAC address is computed in order to provide the lower duration to only one device.

In an alternate embodiment, the second delay is closely dependent on the experience developed by the device and more particularly NPAA agent. This is achieved by deriving said second duration $T_2$ as a function of the time of powering on of the device where the NPAA agent is running. Different embodiments can be used. In the case of the UNIX implementation, the value of the UPTIME parameter can be advantageously used for the purpose of computing the second duration.

Preferably, the following formula is used for computing the value of the second duration:

$$T_2 = \varepsilon + (t_{max} - 2x\varepsilon)/(1 + \alpha t^{\beta})$$

Where t is the delay elapsed since the power on of the device (also known as UPTIME on UNIX systems) and $t_{max}$ is the maximum time the client has to wait before re-querying for a DHCP server. Typically this can be set to 3 seconds for a 10 Mbits Ethernet network, and $\alpha$ and $\beta$ are parameters to be adjusted to optimize the response time for the size of the network and the average boot-up time of the NPAA servers. The parameter $\varepsilon$ is set to allow the conventional DHCP server a sufficient time to respond first, thus enabling a full compatibility with such DHCP servers. Further the parameter $2x\varepsilon$ in the formula above is added to avoid collisions in case several machines were started at substantially the same time.

In a step 407, a test is executed for the purpose of determining whether a response from a NPAA agent is received before the expiration of the second predetermined duration.

If such a response is received - meaning that an other NPAA agent auto-elected itself- the process then goes to a step 408 and completes.

Conversely, the process proceeds to step 409 and the current NPAA is elected.

In a step 410, the network configuration parameters are computed in the newly elected NPAA. This computation is achieved by means of the information and more generally the knowledge which the elected NPAA has of the configuration of the subnetwork. In particular, there is used the knowledge of the IP address and the subnet mask assigned to the subnetwork. It should be observed that if the NPAA is running within the router - e.g. router 205 - this knowledge is immediate as well as that of the gateway, and therefore, the process can then directly derive an IP address which should be available. Preferably, the NPAA agent provides additional network configuration parameters, such as the address of the proxy 250 and the gateway. It should be observed that the computing step 410 may take advantage of any suitable technique to determine the IP address - and more generally the network configuration parameters - which best suit the needs of the requesting device 201. In one embodiment, there is used the knowledge of the IP addresses on the subnetwork, the ARP and NSLOOKUP information from the DNS servers, or further information received from another DHCP server. Preferably, the NPAA agent can take advantage of the use of an expert system for retrieving a potential candidate for a IP address. In a preferred embodiment, the computation of the IP address is completed by a set of tests, such as a check which is performed by the Domain Name Server in order to ensure whether the address which was computed in step 410 is not assigned to a domain name.

In a step 411, the configuration settings are validated. This can be achieved by means of an ICMP ECHO REQUEST, or a PING, or any other suitable technique.

In a step 412, the process then generates a DHCP reply which is a broadcast message such as defined in RFC 2131 and received by the requesting device and the ARP table can then be updated in a step 413. In accordance with step 407 , this DHCP reply will be interpreted by the other running NPAA agents as the signal to complete their own process. In addition to the DHCP reply the elected NPAA can also forward network configuration settings, including the IP address, the subnet mask, the gateway address, the DNS address, the HTTP proxy address, based on DHCP/BOOTP extensions mechanisms.

While the preferred embodiment was described with reference to the assignment of an IP address to a device requesting communication with an Internet or intranet network, the same mechanism can be easily adapted for the purpose of providing additional network configuration parameters to the device, including the reference to the HTTP proxy, and also the Gateway. To some extent the mechanism can even be used, in association with the Preboot eXecution Environment (PXE) extension of the DHCP protocol, for the purpose of providing a booting image to the server. This is very useful for arranging a web server facility on a workstation without having the possibility to use the hard disk drive of this workstation, and more particularly, for reinstalling a partition when a hard disk drive has been changed.

It can even be contemplated that the election process be embodied within a printer or any specific device which is used for distributing proper configuration settings. In this case, the delay of response corresponding to step 406 would be set to a minimum for the purpose of ensuring that the configuration settings will be provided by this specific apparatus.

## Claims

1. Process for distributing network configuration settings throughout a network comprising a set of devices, including the steps of:

   - establishing in at least one device a description of the network environment, **characterized in that** the process further comprises the steps of ;
   - detecting in said at least one device a request for network parameters issued from a newly connected requesting device;
   - in response to detecting said request starting a first timer with a first duration $T_2$ dependent on a predetermined criterion;
   - transmitting to said requesting device network settings after the expiration of said first period.

2. Process according to claim 1 wherein the network configuration settings include an Internet Protocol address.

3. Process according to claim 1 or claim 2 wherein an elaboration of said network environment is performed via access to Address Resolution Protocol tables and NSLOOKUP tables available in the network.

4. Process according to any preceding claim wherein said predetermined criterion is related to the experience gathered by said at least one device.

5. Process according to any preceding claim wherein said predetermined criterion is dependent on the nature of the particular device where the process is running.

6. Process according to claim 1, wherein said detecting step comprises::

   - detecting a Dynamic Host Control Process (DHCP) request issued by said newly connected requesting device;
   - starting a second timer with a second duration $T_1$ prior to the first timer;
   - testing whether said DHCP request received a response from a DHCP server; and
   - terminating the process in response to the detection of said response within said first duration.

7. Process according to claim 6 wherein the process is completed if an answer to said DHCP request is detected during the first duration $T_2$.

8. Process according to claim 6 or 7 wherein said transmitting step comprises:

   - computing an IP address after the expiration of said first duration $T_2$;
   - forwarding a DHCP reply containing said computed IP address to said newly connected requesting device.

9. Process for distributing an IP address in accordance with claim 6, 7 or 8 wherein said first timer is disregarded when said device is a router.

10. Process for distributing an IP address in accordance with claim 6, 7 or 8 wherein said first duration $T_2$ is derived from a computation of both the Media Access Control (MAC) parameter of said device and said newly connected requesting device.

11. Process for distributing an IP address in accordance with claim 6, 7 or 8 wherein said first duration $T_2$ is computed from the time of operation of said device so that the particular device having the longer experience of the network has the lower time of response.

12. Process for distributing an IP address in accordance with said claim 8 wherein said computing step is based on the use of the IP addresses assigned to the network, the Address Resolution Protocol (ARP) and NSLOOKUP information received from the Domain Name Servers (DNS).

13. Process for distributing an IP address in accordance with claim 6 comprising the step of distributing the reference of an existing Hyper Text Transfer Protocol (HTTP) proxy.

14. Process for distributing an IP address in accordance with claim 6 comprising the step of distributing the reference of the gateway.

15. Process for distributing an IP address in accordance with claim 6 comprising the step of distributing a booting image to said newly connected requesting device.

16. Apparatus comprising means for performing all the steps of any one of the preceding claims.

17. Router comprising means for performing all the steps of the process defined by any one of the claims 1 to 13.

18. Printer comprising means for performing all the steps of the process defined by any one of the claims 1 to 13.

**Patentansprüche**

1. Prozess zum Verteilen von Netzwerkkonfigurationseinstellungen überall in einem Netzwerk, das einen Satz von Geräten aufweist, der folgende Schritte aufweist:

   - Einrichten einer Beschreibung der Netzwerkumgebung in zumindest einem Gerät, **dadurch gekennzeichnet, dass** der Prozess ferner folgende Schritte aufweist:
   - Erfassen einer Anforderung nach Netzwerkparametern, die von einem neu verbundenen anfordernden Gerät ausgegeben wird, in dem zumindest einem Gerät;
   - Starten eines ersten Zeitgebers mit einer ersten Dauer $T_2$, die von einem vorbestimmten Kriterium abhängt, ansprechend auf das Erfassen der Anforderung;
   - Übertragen von Einstellungen an das Netzwerk des anfordernden Gerätes nach dem Ablauf der ersten Zeitdauer.

2. Prozess gemäß Anspruch 1, bei dem die Netzwerkkonfigurationseinstellungen eine Internet-Protokoll-Adresse umfassen.

3. Prozess gemäß Anspruch 1 oder Anspruch 2, bei dem eine Entwicklung der Netzwerkumgebung über einen Zugriff auf Adressen-Auflösungsprotokoll-Tabellen und NSLOOKUP-Tabellen durchgeführt wird, die in dem Netzwerk verfügbar sind.

4. Prozess gemäß einem der vorhergehenden Ansprüche, bei dem das vorbestimmte Kriterium auf die durch das zumindest ein Gerät gesammelte Erfahrung bezogen ist.

5. Prozess gemäß einem der vorhergehenden Ansprüche, bei dem das vorbestimmte Kriterium von der Art des speziellen Geräts abhängt, in dem der Prozess abläuft.

6. Prozess gemäß Anspruch 1, bei dem der Erfassungsschritt folgende Schritte aufweist:

- Erfassen eines einer Dynamischer-Host-Steuer-Prozess-Anforderung (DHCP-Anforderung), die von dem neu verbundenen anfordernden Gerät ausgegeben wird;
- Starten eines zweiten Zeitgebers mit einer zweiten Dauer $T_1$ vor dem ersten Zeitgeber;
- Testen, ob die DHCP-Anforderung von einem DHCP-Server eine Antwort empfangen hat; und
- Beenden des Prozesses ansprechend auf die Erfassung der Antwort innerhalb der ersten Dauer.

7. Prozess gemäß Anspruch 6, wobei der Prozess vollendet ist, wenn während der ersten Dauer $T_2$ eine Antwort auf die DHCP-Anforderung erfasst wird.

8. Prozess gemäß Anspruch 6 oder 7, bei dem der Übertragungsschritt folgende Schritte aufweist:

   - Berechnen einer IP-Adresse nach dem Ablauf der ersten Dauer $T_2$;
   - Weiterleiten einer DHCP-Rückmeldung, die die berechnete IP-Adresse enthält, an das neu verbundene anfordernde Gerät.

9. Prozess zum Verteilen einer IP-Adresse gemäß Anspruch 6, 7 oder 8, bei dem der erste Zeitgeber außer Acht gelassen wird, wenn das Gerät ein Router ist.

10. Prozess zum Verteilen einer IP-Adresse gemäß Anspruch 6, 7 oder 8, bei dem die erste Dauer $T_2$ aus einer Berechnung sowohl des Medienzugriffssteuer-Parameters (MAC-Parameters) des Geräts als auch des neu verbundenen anfordernden Geräts hergeleitet wird.

11. Prozess zum Verteilen einer IP-Adresse gemäß Anspruch 6, 7 oder 8, bei dem die erste Dauer $T_2$ aus der Operationszeit des Geräts berechnet wird, so dass das spezielle Gerät, das die längere Erfahrung mit dem Netzwerk aufweist, die kürzere Antwortzeit aufweist.

12. Prozess zum Verteilen einer IP-Adresse gemäß Anspruch 8, bei dem der Berechnungsschritt auf der Verwendung der IP-Adressen, die dem Netzwerk zugeordnet sind, dem Adressen-Auflösungsprotokoll (ARP) und NSLOOKUP-Informationen, die aus den Domainnamenservern (DNS) empfangen werden, basiert.

13. Prozess zum Verteilen einer IP-Adresse gemäß Anspruch 6, der den Schritt eines Verteilens der Referenz eines vorhandenen Hypertext-Übertragungsprotokoll-Proxy (HTTP-Proxy) aufweist.

14. Prozess zum Verteilen einer IP-Adresse gemäß Anspruch 6, der den Schritt eines Verteilens der Referenz des Gateways aufweist.

15. Prozess zum Verteilen einer IP-Adresse gemäß Anspruch 6, der den Schritt eines Verteilens eines Hochfahrbildes an das neu verbundene anfordernde Gerät aufweist.

16. Vorrichtung, die eine Einrichtung zum Ausführen aller Schritte gemäß einem der vorhergehenden Ansprüche aufweist.

17. Ein Router, der eine Einrichtung zum Ausführen aller Schritte des Prozesses aufweist, der durch einen der Ansprüche 1 bis 13 definiert ist.

18. Drucker, der eine Einrichtung zum Ausführen aller Schritte des Prozesses aufweist, der durch einen der Ansprüche 1 bis 13 definiert ist.

**Revendications**

1. Procédé de distribution de paramètres de configuration d'un réseau d'un bout à l'autre d'un réseau comprenant un ensemble de dispositifs, comprenant les étapes :

   ■ de création dans au moins un dispositif d'une description de l'environnement réseau, **caractérisé en ce que** le procédé comprend en outre les étapes de ;
   ■ détection dans ledit au moins un dispositif d'une demande pour des paramètres réseau provenant d'un dispositif de demande nouvellement connecté ;

■ en réponse à la détection de ladite demande, démarrage d'un premier temporisateur avec une première durée $T_2$ dépendante d'un critère prédéterminé ;
■ transmission vers lesdits paramètres réseau du dispositif demandé après l'expiration de ladite première période.

2. Procédé selon la revendication 1 dans lequel les paramètres de configuration réseau comprennent une adresse de Protocole Internet.

3. Procédé selon la revendication 1 ou 2 dans lequel une élaboration dudit environnement réseau s'effectue par l'accès aux tables de Protocole de Résolution d'Adresse et aux tables NSLOOKUP disponibles sur le réseau.

4. Procédé selon l'une quelconque des revendications précédentes dans lequel ledit critère prédéterminé concerne l'expérience acquise par ledit au moins un dispositif.

5. Procédé selon l'une quelconque des revendications précédentes dans lequel ledit critère prédéterminé dépend de la nature du dispositif spécial dans lequel le procédé est exécuté.

6. Procédé selon la revendication 1, dans lequel ladite étape de détection comprend :

   ■ la détection d'une demande de Procédé de Contrôle de Serveur Dynamique (DHCP) provenant dudit dispositif nouvellement connecté ;
   ■ le démarrage d'un second temporisateur avec une seconde durée $T_1$ antérieure au premier temporisateur;
   ■ le test si ladite demande DHCP a reçu une réponse d'un serveur DHCP ; et
   ■ la fin du procédé en réponse à la détection de ladite réponse au cours de la première durée.

7. Procédé selon la revendication 6 dans lequel le procédé est achevé si une réponse à ladite demande DHCP est détectée pendant la première durée $T_2$.

8. Procédé selon les revendications 6 ou 7 dans lequel ladite étape de transmission comprend:

   ■ le calcul d'une adresse IP après l'expiration de ladite durée $T_2$;
   ■ le transfert d'une réponse DHCP comprenant ladite adresse IP calculée vers ledit dispositif de demande nouvellement connecté.

9. Procédé de distribution d'une adresse IP selon les revendications 6, 7 ou 8 dans lequel le premier temporisateur est ignoré quand ledit dispositif est un routeur.

10. Procédé de distribution d'une adresse IP selon les revendications 6, 7 ou 8 dans lequel la première durée $T_2$ provient d'un calcul à la fois du paramètre du Contrôle d'Accès au Support (MAC) dudit dispositif et dudit dispositif de demande nouvellement connecté.

11. Procédé de distribution d'une adresse IP selon les revendications 6, 7 ou 8 dans lequel la première durée $T_2$ est calculée à partir de la durée de fonctionnement dudit dispositif afin que le dispositif spécial ayant l'expérience plus longue du réseau ait le temps de réponse plus faible.

12. Procédé de distribution d'une adresse IP selon ladite revendication 8 dans lequel ladite étape de calcul est basée sur l'utilisation des adresses IP affectées au réseau, du protocole de résolution d'Adresse (ARP) et des informations NSLOOKUP reçues des Serveurs de Noms de Domaine (DNS).

13. Procédé de distribution d'une adresse IP selon la revendication 6 comprenant l'étape de distribution de la référence d'un proxy existant de Protocole de Transfert Hypertexte (HTTP).

14. Procédé de distribution d'une adresse IP selon la revendication 6 comprenant l'étape de distribution de la référence de la passerelle.

15. Procédé de distribution d'une adresse IP selon la revendication 6 comprenant l'étape de distribution d'une image d'amorçage vers ledit dispositif de demande nouvellement connecté.

**16.** Dispositif comprenant des moyens pour effectuer toutes les étapes de l'une quelconque des revendications précédentes.

**17.** Routeur comprenant des moyens pour effectuer toutes les étapes du procédé selon l'une quelconque des revendications 1 à 13.

**18.** Imprimante comprenant des moyens pour effectuer toutes les étapes du procédé selon l'une quelconque des revendications 1 à 13.

Internet
130

Firewall
140

Proxy
150

Logical subnet 160

101  102
DHCP server

Printer
103  Router  105  104

Logical subnet 170

Printer
106  107  108  Router  109  110
DHCP server

Logical subnet180

Printer
111  112  113
DHCP server

# Fig. 1

**Fig. 2**

booting of the requesting device
301

Transmission of DHCP request to neighboring devices
302

wait for answer
303

Receive IP address?
304

no — Is gateway present ?
310

yes — Load settings
317

no — Determine context
311

are settings available?
312

315

no — Start APIPA

yes — Load and apply config settings
313

inhibits activation of setting distribution
316

Store context & activate settings distribution
314

yes — Validate settings and update ARP table
305

Acknowledge IP address to other devices
306

Request bootstrap image
307

download bootstrap image
308

Store context & activate settings distribution
309

# Fig. 3

Detection of DHCP request — 401

Start first timer — 402

Is there response from DHCP server? 403
— no
— yes → Complete process — 404

Is NPAA agent within router? 405
— yes
— no → start second timer — 406

Is there response from an elected NPAA agent? 407
— no
— yes → Complete process — 408

NPAA agent elects itselft — 409

Compute network configuration settings including IP address — 410

validate IP determination — 411

Generate DHCP reply and forward configuration settings — 412

Wait for confirmation and update ARP table — 413

# Fig. 4: NPAA election process

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 6101499 A
- US 6345294 B
- GB 2356111 A